# EUROPEAN PATENT SPECIFICATION

(11) **EP 0 419 224 B1**
(45) Date of publication and mention of the grant of the patent: **12.07.1995**
(21) Application number: 90310227.5
(22) Date of filing: 19.09.1990
(51) Int. Cl.: C09K 11/86, G21K 4/00

(54) **Stimulable phosphor, method of making same, and use thereof**
Stimulierbarer Phosphor, Verfahren zur Herstellung und Anwendung desselben
Matière luminescente stimulable, procédé pour sa fabrication et son application

(30) Priority: 20.09.1989 JP 241801/89
(43) Date of publication of application: 27.03.1991
(73) Proprietor: FUJITSU LIMITED, Kawasaki-shi, Kanagawa 211 (JP)
(72) Inventor: Iwase, Nobuhiro, Atsugi-shi, Kanagawa 243 (JP); Kano, Hiroshi, Sagamihara-shi, Kanagawa 228 (JP); Tadaki, Shinji, Atsugi-shi, Kanagawa 243 (JP); Hasegawa, Masami, Yokohama-shi, Kanagawa 226 (JP); Koshino, Nagaaki, Yokohama-shi, Kanagawa 241 (JP)
(74) Representative: Overbury, Richard Douglas

(56) References cited:
- EP-A- 0 102 051
- EP-A- 0 107 192
- EP-A- 0 159 014
- EP-A- 0 159 015
- EP-A- 0 174 875
- WO-A-89/08921
- PATENT ABSTRACTS OF JAPAN, vol. 14, no. 232 (C-719)(4175), 17 May 1990; & JP-A-2 58 593
- PATENT ABSTRACTS OF JAPAN, vol. 14, no. 261 (C-725)(4204), 06 June 1990; & JP-A-2 75 686

## Description

The present invention relates to a stimulable phosphor, a method of making same, and an X-ray image transforming sheet. More specifically, the present invention relates to a stimulable phosphor activated by divalent europium, and the uses thereof. This phosphor emits a light having a peak near to 400 nm when excited by a radiation such as X-rays, an electron beam or ultraviolet rays, and further, releases a light having a peak near to 400 nm when later irradiated with a visible or infrared light. The latter released light is called photostimulated luminescence, and is used for storing the energy of a radiation and transforming it to a visible light; in particular, it is used for transforming a radiation image into a visible image and one of the most important applications thereof is X-ray image production for medical use.

In the X-ray image production using a stimulable phosphor, an X-ray transmitted through a part of a living body, such as a breast, is irradiated to a stimulable phosphor sheet or panel containing a stimulable phosphor, and the stimulable phosphor sheet or panel is then scanned by a laser beam. When excited by the laser beam, the stimulable phosphor releases energy stored in crystals of the phosphor, as a stimulated luminescence of a near-ultraviolet light corresponding to the stored energy. The near-ultraviolet light is detected by a detector such as a photoelectron multiplicator and then transformed into an electric signal. The electric signal is treated and displayed on a cathode ray tube (CRT), or is used to modulate the intensity of another laser beam scanning and exposing a silver salt film, which is then developed to produce a visible image.

This method of transforming a laser beam into a visible image has remarkably useful features, such as the following.
(1) It is possible to reduce the amount of X-ray exposure.
(2) A satisfactory image can be produced by persons not skilled in the art, since a stimulable phosphor has an X-ray sensitive range wider than that of a silver salt film, and thus an adjustment of the X-ray exposure for producing an image is easy.
(3) Since the image is once transformed into an electric signal, various image treatments such as contour emphasizing can be easily effected.
(4) After producing an image, the X-ray image transforming sheet can be repeatedly used by irradiating the phosphor sheet with a stimulating light to release all stored energy and return same to the original state.

Some stimulable phosphors used for this purpose, for example, cerium and samarium-activated strontium sulfide phosphor (SrS:Ce,Sm), europium and samarium-activated lanthanum oxisulfide phosphor (La₂O₂S:Eu,Sm), and manganese and halogen-activated zinc cadminium sulfide phosphor [(ZnCd)S:Mn,X; where X is a halogen], as disclosed in G.B. Patent No. 1462769 or U.S. Patent No. 3,859,527, are known. Japanese Unexamined Patent Publication (Kokai) No. 55-12143 discloses a stimulable phosphor of (Ba_{1-x-y}MgₓCa_{y})FX:Eu where X is Br or Cl; Japanese Unexamined Patent Publication (Kokai) No. 55-84389 discloses a stimulable phosphor of BaFX:Ce,A where X is Cl, Br or I and A is In, Tl, Gd, Sm or Zr; and Japanese Unexamined Patent Publication (Kokai) No. 60-84381 discloses a stimulable phosphor of MX₂aMX′₂:Eu where M is Ba, Sr or Ca and X and X′ are Cl, Br or I.

Nevertheless, these stimulable phosphors are not adequate for the intended industrial applications.

Namely, the stimulable phosphor disclosed in G.B. Patent No. 1,462,769 or U.S. Patent No. 3,859,527 has a low X-ray sensitivity.

The stimulable phosphors disclosed in Japanese Unexamined Patent Publication (Kokai) Nos. 55-12143 and 55-84389 have a practical reading sensitivity to a stimulation by a visible laser, e.g., a helium neon laser, but can not be stimulated by an infrared semiconductor laser made of a material such as GaAs, GaAlAs or InPGaAs, and therefore, are not practical. The stimulable phosphors disclosed in Japanese Unexamined Patent Publication (Kokai) Nos. 60-84381 and 55-12143 have a spectrum of a stimulated luminescence for reading that extends to a slightly longer wavelength, but do not have sufficient characteristics for a practical reading by a semiconductor laser.

The stimulable phosphors disclosed in Japanese Unexamined Patent Publication (Kokai) No. 60-84381 are MFXX':Eu, similar to the MFX:Eu disclosed in Japanese Unexamined Patent Publication (Kokai) No. 55-12143 in which F is replaced by a halogen X' different from F and X, but do not have a practical sensitivity for reading by a semiconductor laser. Although an intensity of stimulated luminescence measured by stimulating the phosphor MFXX':Eu by a light having a wavelength of 780 nm, in comparison with MFX:Eu, is shown and MFX:Eu exhibits a luminescence intensity in a near-infrared wave length range, larger than an almost zero luminescence of the other stimulable phosphors, the luminescence intensity of MFX:Eu is still too low for practical use.

JP-A-2-58593 and JP-A-275686 each teach methods of producing stimulable phosphors of the general formula:

a(BaX₂).(1-a) (BaY₂) : bEu²⁺

wherein X, Y = F, Cl, Br, I; X Y; 0 < a < 1 and 10⁻⁵ < b < 10⁻¹. Only the particular composition BaBrCl : 0.001Eu²⁺ is exemplified. There is no indication that an improved intensity of stimulated emission with a semiconductor laser might be achieved with these phosphors.

EP-A-0174875 teaches a stimulable phosphor of the general formula:

(M₁₋ₓ.M^{I}ₓ)X.aM^{II}X'₂.bM^{III}X''₃.cA:dB

where M represents Cs or Rb, M^{I} represents an alkali metal, M^{II} is one or more of Be, Mg, Ca, Sr, Ba, Zn, Cd, Cu and Ni, M^{III} represents one or more specified trivalent metals, A represents one or more specified metal oxides, B represents at least one specified metal including, inter alia, Eu, X, X' and X'' each represent halogen and may be the same or different, 0 ≦ x ≦ 1, 0 ≦ a ≦ 1, 0 ≦ b ≦ 0.5, 0 ≦ c ≦ 0.5 and 0 < d ≦ 0.2. Thus, M^{II} X'₂ can never represent more than 50% of the metal-halogen species and in the Examples never represents more than about 10%. There is no teaching of improved intensity of stimulated emission with a semiconductor laser.

The object of the present invention is to provide a novel stimulable phosphor releasing a luminescence having a practical intensity when stimulated by a near-infrared ray of a semiconductor laser. The semiconductor laser in the present invention comprises those having a high output at a wavelength longer than 500 nm, particularly longer than 760-780 nm. Although semiconductor lasers having an output at a higher wavelength, i.e., a visible light, have been developed, semiconductor lasers having a sufficient output for an X-ray image transformation are limited to those having the above wavelengths. More specifically, an output power of at least 20 mW is necessary, which limits the semiconductor laser to the above lasers.

The inventors looked for a solution to the above problem, and found that novel europium-activated barium bromide and related phosphors have a practically high infrared stimulated sensitivity allowing a reading by a stimulation by a semiconductor laser. More specifically, the novel stimulable phosphors are represented by the following formula:

{(M^{II}X¹₂₋₂ᵤX²₂ᵤ)_{1-x-y}(M^{I}X¹₁₋ᵥX²ᵥ)ₓ(M^{III}X¹_{3-3w}X²_{3w})_{y}}₁₋ₐAₐ : bEu²⁺

where M^{II} represents at least one divalent metal selected from Ba, Be, Mg, Ca and Sr; M^{I} represents at least one monovalent metal selected from Li, Na, K, Rb and Cs; M^{III} represents at least one trivalent metal selected from Sc, Y, La, Ce, Pr, Nd, Sm, Gd, Tb, Dy, Ho, Er, Tm, Yb, Lu, Al, Ga, In and Tl; X¹ represents one element selected from Br and Cl; X² represents at least one halogen atom different from X¹; A represents at least one metal oxide selected from BeO, MgO, CaO, SrO, BaO, ZnO, Al₂O₃ , Y₂O₃ , La₂O₃ , In₂O₃ , Ga₂O₃ , SiO₂ , TiO₂ , ZrO₂ GeO₂ , SnO₂ , Nb₂O₅ , Ta₂O₅ and ThO₂; $\text{0 ≦ x+y ≦ 0.5}$ ; $\text{0 ≦ u+v+w < 0.1}$ 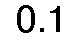 ; 0 ≦ a ≦ 0.1; and 0 < b ≦ 0.2.
Figure 1 is an X-ray diffraction pattern of BaBr:Eu²⁺;
Figure 2 is an intensity of a stimulated luminescence of BaBr₂:Eu²⁺ in relation to the wavelength of the stimulating light;
Figure 3 is an intensity of a stimulated luminescence of BaBr₂:Eu²⁺ in relation to the content of Eu in BaBr₂:Eu²⁺;
Figure 4 is a schematical sectional view of an X-ray transforming sheet;
Figure 5 schematically shows a system of producing an X-ray image;
Figure 6 is an intensity of a stimulated luminescence of BaCl₂:Eu²⁺ in relation to the wavelength of the stimulating light;
Figure 7 is an intensity of a stimulated luminescence of Ba₁₋ₓCaₓBr₂:Eu²⁺ in relation to the wavelength of the stimulating light;
Figure 8 is an intensity of a stimulated luminescence of CaBr₂:Eu²⁺ in relation to the wavelength of the stimulating light;
Figure 9 is an intensity of a stimulated luminescence of BaBr₂₋₂ᵤCl₂ᵤ:Eu²⁺ in relation to the content of BaCl₂ in BaBr₂₋₂ᵤCl₂ᵤ:Eu²⁺
Figure 10 is an intensity of a stimulated luminescence of (BaBr₂)(0.01Ga₂O₃):Eu²⁺ in relation to the wavelength of the stimulating light;
Figures 11 and 12 are schematical sectional views of an X-ray transforming sheet;
Figure 13 shows a percentage transmission of a glass plate with an anti-reflecting layer; and
Figure 14 is a schematical sectional view of an X-ray transforming sheet.

The stimulated luminescence phenomenon of the stimulable phosphor of the present invention is described with the use of BaBr₂:Eu²⁺ as an example. When irradiated with an x-ray or ultraviolet ray, Eu, an emission center, is excited to emit a blue light, i.e., a photoluminescence. Simultaneously, electrons in some Eu atoms are excited and captured by color centers. The color center is a lattice defect of Br and is electrically positively charged, and thus the electrons are captured by the color centers, which is the memory. Then, if the stimulable phosphor is irradiated with a red to infrared light, the electrons captured in the color centers are excited and returned to the original Eu, while a blue light is emitted. This is known as a stimulated luminescence. The intensity of the stimulated luminescence is in relation to the intensity of the X-ray.

Europium is essential to the photostimulated luminescence of the stimulable phosphors of the present invention, but if the content of europium is more than 20 mole%, the crystallinity of (M^{II}X¹₂₋₂ᵤX²₂ᵤ)_{1-x-y}(M^{I}X¹₁₋ᵥX²ᵥ)ₓ(M^{III}X¹_{3-3w}X²_{3w}) is damaged and the intensity of photostimulated luminescence is undesirably lowered. Therefore, 0 < b ≦ 0.2, preferably 0 < b ≦ 0.1, and particularly preferably 0.0005 ≦ b ≦ 0.002, from the viewpoint of the intensity of the photostimulated luminescence.

The compound (M^{II}X^{¹}₂₋₂ᵤX²₂ᵤ)_{1-x-y}(M^{I}X^{¹}₁₋ᵥX²ᵥ)ₓ(M^{III}X¹_{3-3w}X²_{3w})₁₋ₐAₐ: bEu²⁺ includes the following:
1) BaBr₂:bEu²⁺.
2) BaCl₂:bEu²⁺.
3) Ba₁₋ᵤM¹ᵤBr₂:bEu²⁺ where M¹ is at least one of Be, Mg, Ca and Sr and 0 < u ≦ 1. Namely, Ba may be partly or completely replaced by a divalent metal of Be, Mg, Ca or Sr.
4) (BaBr₂)₁₋ₓ(M^{I}Br)ₓ:bEu²⁺ where M^{I} is at least one monovalent metal of Li, Na, K, Rb and Cs, and 0 < x ≦ 0.5, preferably 0 < x ≦ 0.05, more preferably 0 < x ≦ 0.01. Namely, Ba may be partly replaced by a monovalent metal.
5) (BaBr₂)_{1-y}(M^{III}Br₃)_{y}:bEu²⁺ where M^{III} is at least one trivalent metal of Sc, Y, La, Ce, Pr, Nd, Sm, Gd, Tb, Dy, Ho, Er, Tm, Yb, Lu, Al, Ga, In and Tl, and 0 < y ≦ 0.5, preferably 0 < y ≦ 0.05, more preferably 0 < y ≦ 0.01. Namely, Ba may be partly rePlaced by a trivalent metal.
6) (BaBr₂)_{1-x-y}(M^{I}Br)ₓ(M^{III}Br₃)_{y}:bEu²⁺ where M^{I} is at least one monovalent metal of Li, Na, K, Rb, and Cs, and M^{III} is at least one trivalent metal of Sc, Y, La, Ce, Pr, Nd, Sm, Gd, Tb, Dy, Ho, Er, Tm, Yb, Lu, Al, Ga, In and Tl, and $\text{0 < x+y ≦ 0.5}$ , preferably $\text{0 < x+y ≦ 0.05}$ , more preferably $\text{0 < x+y ≦ 0.01}$ . Namely, Ba may be partly replaced by a combination of a monovalent metal and a trivalent metal.
7) BaBr₂₋₂ᵤX^{II}₂ᵤ:bEu²⁺ where X^{II} is at least one of F, Cl and I and 0 < u < 0.1, preferably 0 < u < 0.08, more preferably 0 < u < 0.05. Namely, Br may be partly replaced by a different halogen. It should be noted that the phosphor of the present invention is different from the known BaXX' (X and X' are different halogens), for example, BaBrCl. When a part of a halogen, e.g., X', of BaXX' is replaced by the other halogen X, the intensity of photostimulated luminescence is remarkably lowered to near zero with an increase of the replacement X, but is raised when the composition becomes BaX₂ (X is Br or Cl), or very close thereto. This clearly suggests that BaX₂ (X is Br or Cl) is a photostimulated luminescence material essentially different from BaXX' (X and X' are different halogens), i.e., not a modification or improvement of BaXX' by an addition of BaX₂ to BaXX', and thus, the only a small amount of the second halogen X can be used in the present invention.
8) (BaBr₂)₁₋ₐAₐ:bEu²⁺ where A is at least one metal oxide of BeO, MgO, CaO, SrO, BaO, ZnO, Al₂O₃ , Y₂O₃ , La₂O₃ , In₂O₃ , Ga₂O₃ , SiO₂ , TiO₂ , ZrO₂ , GeO₂ , SnO₂ , Nb₂O₅ , Ta₂O₅ and ThO₂ , and 0 < a ≦ 0.1, preferably 0 < a ≦ 0.05, more preferably 0 < a ≦ 0.01. Namely, a small amount of a metal oxide may be added.
9) Any combination of 3) to 8). For example, (BaBr₂₋₂ᵤX²₂ᵤ)₁₋ₐAₐ:bEu²⁺.
10) Any one similar to 3) to 9), wherein Br₂ is replaced by Cl₂. Namely, BaCl₂ may be used as the base compound instead of BaBr₂.

The production of the above stimulable phosphor can be performed by firing a mixture of M^{II}X¹₂ and an Eu source, e.g., EuX₂ (X is a halogen, particularly Br or Cl), optionally with M^{II}X²₂ , M^{I}X¹ , M^{I}X², M^{III}X¹₃ , M^{III}X²₃ , and/or A. The starting materials may be hydrates thereof.

The mixing can be carried out by a dry mixing by a ball mill, by a wet procedure of dissolving the starting materials in water and then drying under vacuum or in air, or by heat drying same to remove water and obtain a dry mixture, or other procedures. In the wet mixing, the obtained mixture is dried in air at 200 - 600°C or in vacuum at 100 - 300°C, and the mixture is then preferably fired in a reducing atmosphere containing hydrogen. Alternatively, the original firing atmosphere may be an inactive atmosphere or an oxidizing atmosphere to ash and remove the binder; which firing should be followed by reducing Eu in a reducing atmosphere. A suitable reducing atmosphere is an inert gas or nitrogen atmosphere containing hydrogen not more than 30.001%, for example, nitrogen gas atmosphere, argon gas atmosphere or helium gas atmosphere, preferably an atmosphere of a mixture of helium and hydrogen. The firing temperature depends on the types and compositions of the starting materials, but 500 -1000°C is generally adequate, with 700 - 900°C being preferable, as in a conventional procedure. The firing time depends on the types and compositions of the starting materials, an amount of the starting materials charged in a refractory container, and the firing temperature, etc., but is generally 30 minutes to 48 hours, preferably 1 - 12 hours, at the above firing temperature. After firing, the phosphor is sintered and a pulverization and screening must be carried out. The pulverization and screening are preferably carried out in a dry atmosphere and in an inactive gas atmosphere, to prevent an absorption of moisture; this is also preferable during the mixing of the starting materials.

The stimulable phosphor is coated on a support to form an X-ray transforming sheet.

The support may be a Myler film, a plastic plate, or a ceramic plate, etc., and may include a carbon black layer for improving the resolving power, a reflecting layer of aluminum for improving the sensitivity, and a protecting layer for preventing moisture absorption, etc., on the surface thereof.

The formation of a stimulable phosphor layer on a support can be performed by coating a paste of a stimulable phosphor, a binder and a solvent on the support, followed by drying and curing the binder, if necessary by heating or radiation irradiation. The binder may be, for example, acryl resin, epoxy resin, urethane resin, phenol resin, nylon resin, teflon resin, or polyester resin, etc. The phosphor preferably has a particle size of less than 100 »m, more preferably less than 30 »m. The stimulable phosphor is preferably mixed with a binder in an amount of 10 - 99% by weight, more preferably 80 - 95% by weight, of the stimulable phosphor.

The stimulable phosphor layer may be a layer of a single stimulable phosphor or a mixture of stimulable phosphors including a conventional stimulable phosphor, or a multiple stimulable phosphor layer with other stimulable phosphor layers.

If necessary, the coating of the stimulable phosphor is performed by adjusting the viscosity of the paste by a solvent, followed by coating the paste on the support by a doctor blade or a roll coater, etc. The thickness of the coating (dry) is 50 - 500 »m, preferably 150 - 300 »m.

The surface of the stimulable phosphor layer is preferably covered by a protecting layer, etc., and as the protecting layer, a glass layer, a Myler film, or a polyethylene terephthalate film having an indium tin oxide (ITO) layer, etc., may be used.

The method of producing an X-ray image of the present invention is the same as the conventional method, except that the stimulable phosphor used is novel and a semiconductor laser can be preferably used as a source of the stimulating light. Namely, an X-ray image transforming sheet is irradiated with an X-ray through an object such as a human body, to cause an absorption of the transmitted X-ray by the X-ray image transforming sheet. Then, the X-ray image transforming sheet is irradiated with an electromagnetic radiation having a wave length of 500 - 1000 nm, to release the radiation energy stored in the X-ray image transforming sheet as a photostimulated luminescence. This photostimulated luminescence is in the form of an image corresponding to the X-ray image transmitted through the object, and therefore, by a visualization of the photostimulated luminescence, an X-ray image can be obtained. The visualization process may be a conventional photography, but is preferably made by scanning a stimulating beam on the X-ray image transforming sheet, detecting the released stimulated luminescence, transforming the intensity of the detected luminescence into an electric signal, and visualizing the electric signal by an electric means. In this latter method, various image treatments can be effected on an X-ray image.

The X-ray image transforming sheet of the present invention is characterized by the capability of using a semiconductor laser as a stimulating light source. Semiconductor lasers having a wave length of 670 - 680 nm, 780 nm, 830 nm or 900 nm have been developed and put to a practical use, and preferably these semiconductor lasers are used. The known stimulable phosphors are sensitive mainly to a stimulating light having a shorter wavelength, and therefore, cannot produce a desired luminescence having a sufficient intensity by a semiconductor laser having a limited output power, and thus only a helium-neon laser having a wave length of 630 nm or a laser having a shorter wave length can be practically used at present. In contrast, in the stimulable phosphors of the present invention, a photostimulated luminescence having an intensity of more than 1.5 times, (depending on the wave length, more than several tens of times) is obtained by stimulating with a semiconductor laser, in comparison with those obtainable from conventional stimulable phosphors. Accordingly, an X-ray image can be obtained with an X-ray exposure within a range tolerant to a human body and with the use of a semiconductor laser. Further, the X-ray exposure for obtaining an X-ray image by a semiconductor laser can be reduced in comparison with conventional stimulable phosphors.

### EXAMPLES

### Example 1

0.998 mole of 99.999% and 95% purity BaBr₂ powders and 0.001 mole of EuBr₃ powder were mixed in a ball mill for 6 hours, the mixture was dried in the ball mill by opening a cap thereof and causing a vacuum at 100°C for 2 hours, and the mixture then further milled for 6 hours.

The mixed phosphor starting materials were charged in a quartz boat, mounted in a quartz tube, and fired at 850°C for 2 hours. The firing atmosphere was a gas flow of hydrogen at 10 cc/min and helium at 10 l/min. After firing, the center of the quartz tube was cooled to 400°C, the boat was moved from a high temperature portion to a low temperature portion in the tube, and allowed to cool to room temperature in the tube. The obtained phosphor was lightly crushed in an agate mortar.

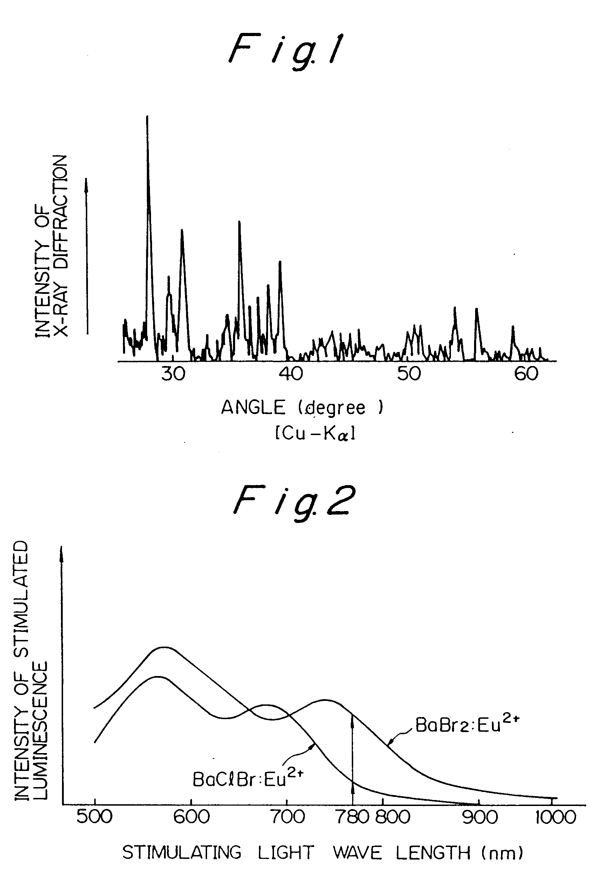

Figure 1 shows the X-ray diffraction pattern of the obtained phosphor. This phosphor has a crystal structure of BaBr₂. The bright line spectrum analyzed on the phosphor had a blue emission peak at 400 nm, which was confirmed to be an emission from Eu²⁺.

For comparison, a known BaClBr:0.001Eu²⁺ was prepared in a similar manner.

These phosphors were charged in a measurement cell having a quartz glass window and the spectrum of the stimulated luminescence was analyzed. The light used for stimulation was a spectral light obtained by passing a light from a halogen lamp through a spectrograph. The phosphor in a quartz cell was irradiated with the stimulating light, and the light released from the phosphor as a photostimulated luminescence was introduced to a photomultiplier tube through a filter which prevents a transmission of the stimulating light therethrough. The introduced light was photoelectrically transferred by the photomultiplier tube, to determine the intensity of the stimulated luminescence. The phosphor packed in a cell was irradiated with an X-ray emitted from an X-ray tube (a tube voltage of 80 kV and a d-current of 200 mA) and located 1 m away from the phosphor (an irradiation time of 0.5 second), this phosphor was placed in the above-mentioned measurement cell and analyzed, and the thus-obtained spectrum of the photostimulated luminescence is shown in Fig. 2.

Figure 2 demonstrates that, when stimulated by a light having a wavelength of 780 nm, BaBr₂:Eu²⁺ exhibits a photostimulated luminescence having an intensity about 5 times higher than that of BaClBr:Eu²⁺. The sensitivity of the phosphor was lowered by only about 10% when the 95% purity phosphor was compared with the 99.999% purity phosphor.

### Example 2

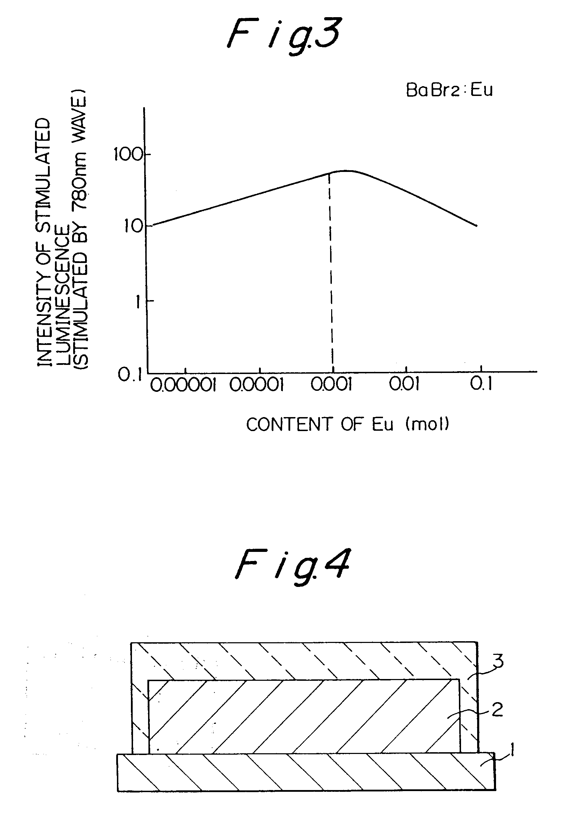

A phosphor was prepared in the same manner as in Example 1, except that the ratio of EuBr₃ was varied, and the intensity of the photostimulated luminescence thereof was measured. Figure 3 shows the intensity of photostimulated luminescence of the phosphor when stimulated by a semiconductor laser having a wavelength of 780 nm.

### Example 3

To 500 g of the BaBr₂:Eu²⁺ of Example 1 were added 30 g of polymethylmethacrylate, 3 g of dibutylphthalate, and 150 g of toluene, and the mixture was mixed in a ball mill for 20 hours.

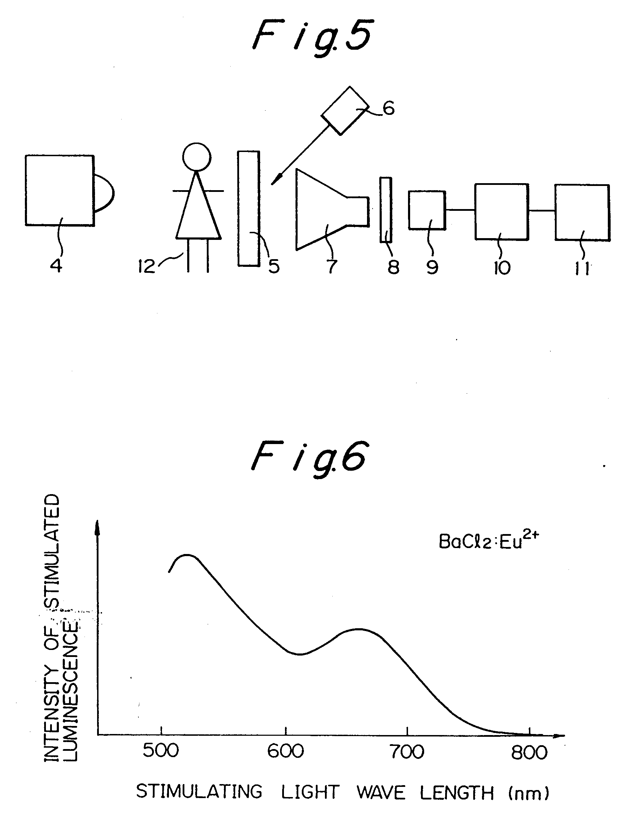

Referring to Fig. 4, the thus-obtained paste of the phosphor was coated on a support 1 of a Myler film by a doctor blade, and dried to form a phosphor layer 2 having a thickness of 200 »m. The top and side surfaces of the phosphor layer 2 was covered by an ITO layer and an epoxy resin adhesive, to form a protecting layer 3.

The obtained X-ray image transforming sheet was irradiated with a 10 mR X-ray, and then scanned by a laser beam from a 10 mW semiconductor laser (wavelength 780 nm), to measure the photostimulated luminescence.

For comparison, an X-ray image transforming sheet using BaClBr:Eu²⁺ as the phosphor was made and measured in the same manner as in Example 3.

The results are shown in Table 1.

**Table 1**

| Material | Intensity of photostimulated luminescence |
|---|---|
| BaClBr:0.001Eu²⁺ | 100 |
| BaBr₂.0.001Eu²⁺ | 480 |

### Example 4

The X-ray image transforming sheet of Example 3 was installed in a recording and reading apparatus shown in Fig. 5, and a transmitted image of a human breast was produced. In Fig. 5, 4 denotes an X-ray source, 5 an X-ray image transforming sheet, 6 a laser source, 7 a collector, 8 a filter, 9 a photoelectric transfer device, 10 an image reproducing device, 11 an image display device, and 12 a human body (an object). A clear image was produced at a voltage of 100 V, an irradiation distance of 2 m, an X-ray irradiation amount of 10 MAS, and a reading laser light of 780 nm and 10 mW.

### Example 5

First, 208.2 g of BaCl₂ and 0.26 g of EuCl₃ were mixed in a ball mill for 6 hours, dried in vacuum at 100°C for 1 hour, and again ball-milled for 6 hours. The resultant mixture was charged in a quartz boat and fired at 880°C in a reducing atmosphere for 2 hours. The atmosphere was a helium gas containing hydrogen.

The intensity of the stimulated luminescence of the obtained phosphor BaCl₂:0.001Eu²⁺ was measured by an irradiation with a 10 mR X-ray and then scanning by a spectroscopic light (wavelength 500 - 900 nm). The result is shown in Fig. 6. The peak thereof is near to 670 nm.

### Examples 6 and 7

The starting materials having a composition shown in Table 2 were mixed in a ball mill for 6 hours, dried in vacuum at 100°C for 1 hour, and again ball-milled for 6 hours. The mixture was charged in a quartz boat and fired at 830°C in a reducing atmosphere for 2 hours. The atmosphere was a helium gas containing hydrogen. For comparison, the same stimulable phosphor without an addition of CaBr₂ or MgBr₂ was prepared.

**Table 2**

| Example | Starting material | Weight (g) | Composition |
|---|---|---|---|
| 6 | BaBr₂ | 881 | (Ba_{0.8}Ca_{0.2})Br₂:0.001Eu²⁺ |
| | CaBr₂ | 119 | |
| | EuBr₃ | 2.23 | |
| 7 | BaBr₂ | 856 | (Ba_{0.8}Mg_{0.2})Br₂:0.001Eu²⁺ |
| | MgBr₂ | 144 | |
| | EuBr₃ | 2.23 | |

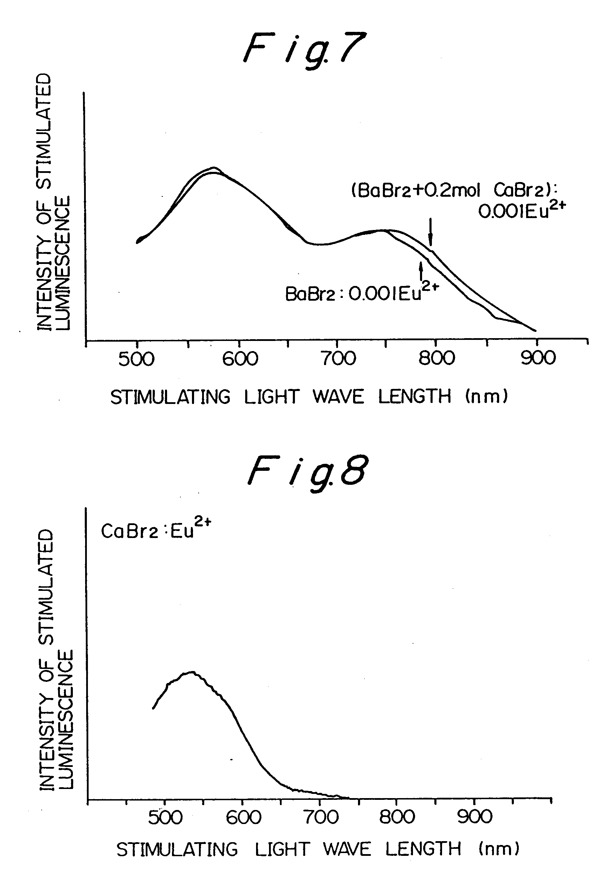

The intensity of the stimulated luminescence of the obtained phosphors was measured by irradiation with a 10 mR X-ray and then scanning by a spectroscopic light (wavelength 500 - 900 nm). The results are shown in Fig. 7. When the amount added of CaBr₂ was varied, the sensitivity of the stimulated luminescence stimulated by a 780 - 830 nm light was improved 1.2 - 1.5 times.

### Example 8

First, 199.7 g of CaBr₂ and 0.39 g of EuBr₃ were mixed in a ball mill for 6 hours, dried in vacuum at 100°C for 1 hour, and again ball-milled for 6 hours. The mixture was charged in a quartz boat and fired at 740°C in a reducing atmosphere for 2 hours. The atmosphere was a helium gas containing hydrogen.

The intensity of the stimulated luminescence of the obtained phosphor CaBr₂:0.001Eu²⁺ was measured by irradiation with a 10 mR X-ray and then scanning by a spectroscopic light (wavelength 500 - 900 nm). The result is shown in Fig. 8. The peak thereof is near to 540 nm.

### Example 9

Predetermined amounts of BaBr₂ , EuBr₃ and BaCl₂ were mixed in a ball mill for 6 hours, dried in vacuum at 100°C for 1 hour, and again ball milled for 6 hours. The amount of BaCl₂ was varied. The mixture was charged in a quartz boat and fired at 840°C in a reducing atmosphere for 2 hours. The atmosphere was a helium gas containing hydrogen.

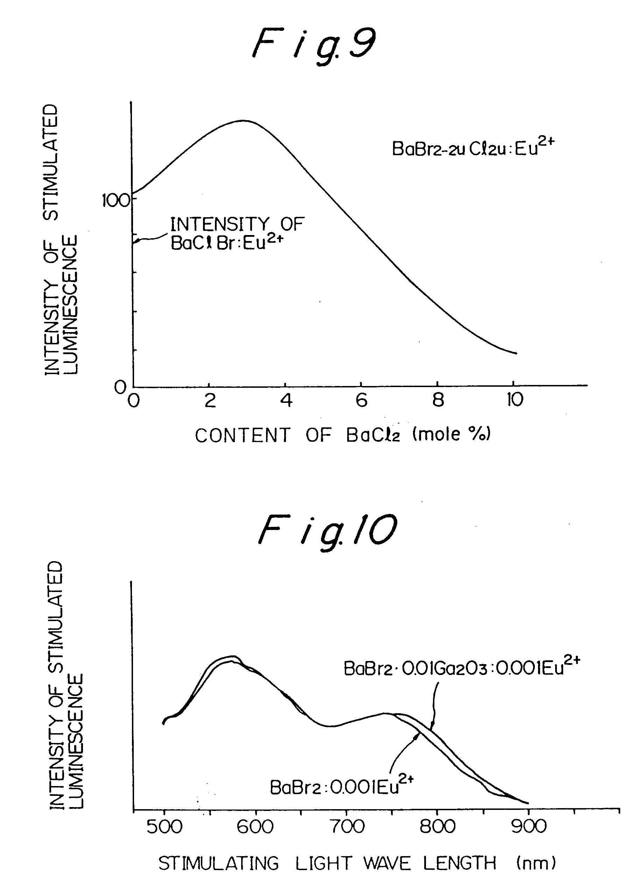

The intensity of the stimulated luminescence of the obtained phosphor BaBr₂₋₂ᵤCl₂ᵤ:0.001Eu²⁺ (0 ≦ u ≦ 0.1) was measured by irradiation with a 10 mR X-ray and then scanning by a 100 mW argon ion laser (wave length 532 nm). The results is shown in Fig. 9. It is seen that the intensity of the stimulated luminescence can be improved to about 1.5 times that of BaBrCl:0.001Eu²⁺, and further, as seen in Fig. 3, it can be improved to about 1.5 times by controlling the content of Eu.

### Example 10

Example 9 was repeated except that the firing atmosphere was a nitrogen atmosphere containing hydrogen.

### Example 11

Example 9 was repeated except that the starting materials were first wet mixed and then dried.

### Example 12

Example 9 was repeated except that the starting materials were first dissolved in water, filtered, wet mixed, and then dried.

The intensities of the stimulated luminescence of the obtained phosphors in Examples 9 - 12 were measured by irradiation with a 10 mR X-ray and the scanning by a 10 mW semiconductor laser (wave length 780 nm). The results (relative intensity when the intensity of Example 9 is 100) are shown in Table 3.

**Table 3**

| Example No. | Intensity |
|---|---|
| 9 | 100 |
| 10 | 80 |
| 11 | 135 |
| 12 | 145 |

### Examples 13 - 16

Predetermined amounts of BaBr₂ , EuBr₃ and NaBr were mixed in a ball mill for 6 hours, dried in vacuum at 100°C for 1 hour, and again ball-milled for 6 hours. The amount of NaBr was varied. The mixture was charged in a quartz boat and fired in a reducing atmosphere at 840°C for 2 hours. The atmosphere was a helium gas containing hydrogen.

The intensities of the stimulated luminescence of the obtained phosphors Ba₁₋ₓNaₓBr₂₋ₓ:0.001Eu²⁺ (0 ≦ x ≦ 0.04) were measured by irradiation with a 10 mR X-ray and then scanning by a 10 mW semiconductor laser (wave length 780 nm). The results are shown in Table 4. The intensity is a relative value when the intensity of BaBr₂:0.001Eu²⁺ is 100.

**Table 4**

| Example No. | Composition | Intensity |
|---|---|---|
| 13 | BaBr₂:0.001Eu²⁺ | 100 |
| 14 | Ba_{0.99}Na_{0.01}Br_{1.99}:0.001Eu²⁺ | 108 |
| 15 | Ba_{0.98}Na_{0.02}Br_{1.98}:0.001Eu²⁺ | 135 |
| 16 | Ba_{0.96}Na_{0.04}Br_{1.96}:0.001Eu²⁺ | 117 |

### Example 17

First, 294.2 g of BaBr₂ , 0.39 g of EuBr₃ , and 0.58 g of NaCl were mixed in a ball mill for 6 hours, dried in vacuum at 100°C for 1 hour, and again ball milled for 6 hours. The mixture was charged in a quartz boat and fired in a reducing atmosphere at 840°C £or 2 hours. The atmosphere was a helium gas containing hydrogen.

The intensity of the stimulated luminescence of the obtained phosphor Ba_{0.99}Na_{0.01}Br_{1.98}Cl_{0.01}:0.001Eu²⁺ was measured by irradiation with a 10 mR X-ray and then scanning by a 10 mW semiconductor laser (wavelength 780 nm). The result was 120, as a relative value when the intensity of BaBr₂:0.001Eu²⁺ was 100.

### Examples 18 - 22

Similar results were obtained when Na was replaced by Li or K in Examples 13 - 17.

### Examples 23 - 25

Predetermined amounts of BaBr₂ , EuBr₃ and GdBr₃ were mixed in a ball mill for 6 hours, dried in vacuum at 100°C for 1 hour, and again ball-milled for 6 hours. The mixture was charged in a quartz boat and fired in a reducing atmosphere at 840°C for 2 hours. The atmosphere was a helium gas containing hydrogen.

The intensities of the stimulated luminescence of the obtained phosphors Ba_{1-y}Gd_{y}Br_{2+y}:0.001Eu²⁺ (0 ≦ y ≦ 0.04) were measured by irradiation with a 10 mR X-ray and then scanning by a 10 mW semiconductor laser (wavelength 780 nm). The results are shown in Table 5. The intensity is a relative value when the intensity of BaBr₂:0.001Eu²⁺ is 100.

**Table 5**

| Example No. | Composition | Intensity |
|---|---|---|
| 13 | BaBr₂:0.001Eu²⁺ | 100 |
| 23 | Ba_{0.99}Gd_{0.01}Br_{2.01}:0.001Eu²⁺ | 120 |
| 24 | Ba_{0.98}Gd_{0.02}Br_{2.02}:0.001Eu²⁺ | 132 |
| 25 | Ba_{0.96}Gd_{0.04}Br_{2.04}:0.001Eu²⁺ | 118 |

### Examples 26

First, 294.2 g of BaBr₂ , 0.39 g of EuBr₃ and 2.64 g of GdCl₃ were mixed in a ball mill for 6 hours, dried in vacuum at 100°C for 1 hour, and again ball-milled for 6 hours. The mixture was charged in a quartz boat and fired in a reducing atmosphere at 840°C for 2 hours. The atmosphere was a helium gas containing hydrogen.

The intensity of the stimulated luminescence of the obtained phosphor Ba_{0.99}Gd_{0.01}Br_{1.98}Cl_{0.03}:0.001Eu²⁺ was measured by irradiation with a 10 mR X-ray and then scanning by a 10 mW semiconductor laser (wave length 780 nm). The result was 120, as a relative value when the intensity of BaBr₂:0.001Eu²⁺ was 100.

### Examples 27 - 30

Similar results were obtained when Gd was replaced by Y or Ga in Examples 23 - 25.

### Examples 31 - 33

Predetermined amounts of BaBr₂ , EuBr₃ , NaBr and GdBr₃ were mixed in a ball mill for 6 hours, dried in vacuum at 100°C for 1 hour, and again ball milled for 6 hours. The amount of GdBr₃ was varied. The mixture was charged in a quartz boat and fired in a reducing atmosphere at 840°C for 2 hours. The atmosphere was a helium gas containing hydrogen.

The intensities of the stimulated luminescence of the obtained phosphors Ba_{1-x-y}NaₓGd_{y}Br_{2-x+y}:0.001Eu²⁺ (0 ≦ x, y ≦ 0.02) were measured by irradiation with a 10 mR X-ray and then scanning by a 10 mW semiconductor laser (wave length 780 nm). The results are shown in Table 6. The intensity is a relative value when the intensity of BaBr₂:0.001Eu²⁺ was 100.

**Table 6**

| Example No. | Composition | Intensity |
|---|---|---|
| 13 | BaBr₂:0.001Eu²⁺ | 100 |
| 31 | Ba_{0.99}Na_{0.005}Gd_{0.005}Br₂:0.001Eu²⁺ | 128 |
| 32 | Ba_{0.98}Na_{0.01}Gd_{0.01}Br₂:0.001Eu²⁺ | 132 |
| 33 | Ba_{0.96}Na_{0.02}Gd_{0.02}Br₂:0.001Eu²⁺ | 118 |

### Example 34

First, 294.2 g of BaBr₂, 0.39 g of EuBr₃ , 1.32 g of GdCl₃ and 0.29 g of NaCl were mixed in a ball mill for 6 hours, dried in vacuum at 100°C for 1 hour, and again ball milled for 6 hours. The mixture was charged in a quartz boat and fired in a reducing atmosphere at 840°C for 2 hours. The atmosphere was a helium gas containing hydrogen.

The intensity of the stimulated luminescence of the obtained phosphor Ba_{0.99}Na_{0.005}Gd_{0.005}Br_{1.98}Cl_{0.02}:0.001Eu²⁺ was measured by irradiation with a 10 mR X-ray and then scanning by a 10 mW semiconductor laser (wavelength 780 nm). The result was 115, as a relative value when the intensity of BaBr₂:0.001Eu²⁺ was 100.

### Examples 35 - 37

Similar results were obtained when Gd was replaced by Y or Ga and/or Na was replaced by Li or K in Examples 31 - 33.

### Examples 38 - 54

Predetermined amounts of BaBr₂ , EuBr₃ and each metal oxide A shown in Table 7 were mixed in a ball mill for 6 hours, dried in vacuum at 100°C for 1 hour, and again ball milled for 6 hours. The ratio of the metal oxide A was 1.0 mole% and that of the Eu element was 0.1 mole %. The mixture was charged in a quartz boat and fired in a reducing atmosphere at 840°C for 6 hours. The atmosphere was a helium gas (5 ℓ/min) containing hydrogen (5 cc/min).

The intensity of the stimulated luminescence of the obtained phosphor (BaBr₂)(0.01Ga₂O₃):0.001Eu²⁺ was measured by irradiation with a 10 mR X-ray and then scanning by a varying wavelength. The result is shown in Fig. 10.

The intensities of the stimulated luminescence of the obtained phosphors (BaBr₂)0.01A:0.001Eu²⁺ were measured by irradiation with a 10 mR X-ray and then scanning by a 10 mW semiconductor laser (wavelength 780 nm). The results are shown in Table 7. The intensity is a relative value when the intensity of BaBr₂:0.001Eu²⁺ is 100.

**Table 7**

| Ex. No. | Metal oxide A | Peak intensity | Intensity at 780 nm |
|---|---|---|---|
| 13 | - | 100 | 52 |
| 38 | Ga₂O₃ | 105 | 61 |
| 39 | Al₂O₃ | 103 | 59 |
| 40 | SiO₂ | 101 | 59 |
| 41 | MgO | 98 | 58 |
| 42 | CaO | 95 | 56 |
| 43 | BaO | 101 | 60 |
| 44 | ZnO | 95 | 55 |
| 45 | Y₂O₃ | 103 | 60 |
| 46 | La₂O₃ | 97 | 56 |
| 47 | In₂O₃ | 95 | 55 |
| 48 | TiO₂ | 102 | 59 |
| 49 | ZrO₂ | 105 | 60 |
| 50 | GeO₂ | 103 | 60 |
| 51 | SnO₂ | 93 | 53 |
| 52 | Nb₂O₅ | 95 | 54 |
| 53 | Ta₂O₅ | 92 | 51 |
| 54 | ThO₂ | 93 | 52 |

### Example 55

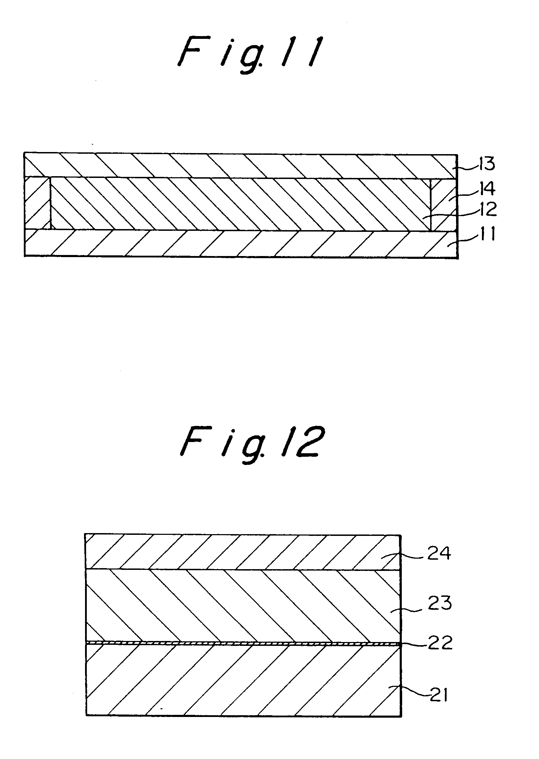

X-ray image transforming sheets having a structure shown in Fig. 11 were made. In Fig. 11, 11 denotes a support, 12 a stimulable phosphor layer, 13 a protecting layer, and 14 an adhesive.

A moisture permeation test was performed on the materials used for the protecting layer 13 and a support 11 of the above X-ray image transforming sheets, under JIS/Z0208. The temperature was 40°C and the humidity was 90%. The sheet materials used were a glass plate having a thickness of 80 »m, an aluminum plate having a thickness of 0.2 mm, and a stainless steel plate having a thickness of 0.2 mm. For comparison, a polyethylene terephthalate (PTE) film having a thickness of 50 »m and a Saran UB film having a thickness of 25 »m were used.

The results are shown in Table 8.

**Table 8**

| Sample measured | Humidity permeation (g/m² 24h) |
|---|---|
| PET film | 8 |
| Saran UB | 0.7 |
| Glass plate | less than 0.001 |
| Aluminum plate | less than 0.001 |
| Stainless plate | less than 0.001 |

It is seen that an inorganic plate such as an metal or glass plate is excellent as a protecting layer.

### Example 56

X-ray image transforming sheets having a structure shown in Fig. 12 were made. On a glass plate 21 having a thickness of 1.1 mm, a dielectric reflecting layer 22 of SiO₂ , AlN, SnO₂ , In₂O₃ , ZnO, Si₃N₄ , TiO₂ MgF₂ or LiF having a thickness of about 50 nm was formed by evaporation or sputtering and then a stimulable phosphor layer 23 of BaBr₂:Eu²⁺ having a thickness of about 200 »m and a glass protecting layer 24 having a thickness of 700 »m were formed.

The intensities of the stimulated luminescence of the obtained X-ray image transforming sheets were measured by irradiation with a 10 mR X-ray and then scanning by a 10 mW semiconductor laser (wavelength 780 nm). The results are shown in Table 9. The intensity is a relative value when the intensity of the sheet without a dielectric reflecting layer is 100.

**Table 9**

| Sample measured | Intensity of stimulated luminescence |
|---|---|
| SiO₂ | 1.30 |
| AlN | 1.35 |
| SnO₂ | 1.50 |
| In₂O₃ | 1.45 |
| ZnO | 1.45 |

Similar results were obtained when the supports used had a thickness of 1.5 mm.

### Example 57

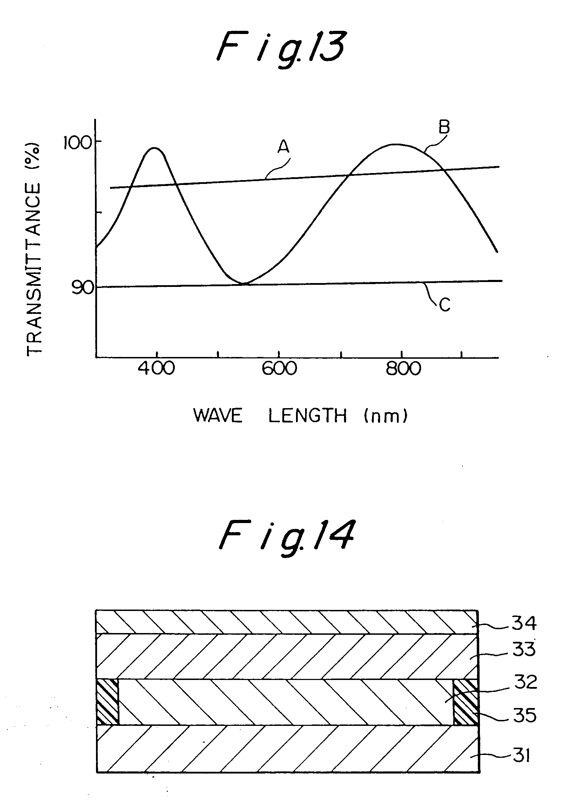

The light transmittances of glasses having a thickness of 0.5 mm and coated on both surfaces with an anti-reflecting multi layer (20 layers of MgF₂ having a thickness of 100 - 300 nm) or an anti-reflecting single layer (a layer of MgF₂ having a thickness of 100 nm and adjusted to a wavelength of 780 nm) were measured and shown as the curves A and B, respectively, in Fig. 13. For comparison, a light transmittance of the same glass without an anti-reflecting layer was measured and shown as the curve C in Fig. 13. It is seen in Fig. 13 that the transmittance was improved by about 7 - 9% when an anti-reflecting multilayer was applied, in comparison with that without an anti-reflecting layer. The transmittance was improved by about 2 - 3% by an anti-reflecting single layer, in comparison with that having an anti-reflecting multilayer.

X-ray image transforming sheets having a structure shown in Fig. 14 were made. A support 31 as a glass plate having a thickness of 1.1 mm, in which a stimulable phosphor layer 32 of BaBr₂:Eu²⁺ (0.3 mm thick) was coated as a paste thereof with an acryl resin by a doctor blade. Further, a glass plate (0.5 mm thick) 33 coated with an anti-reflecting layer 34 as described above was provided on the stimulable phosphor layer 2 with an adhesive 35. For comparison, a glass plate without an anti-reflecting layer was provided on another sheet.

The sensitivities of these X-ray image transforming sheets are shown in Table 10. The measurement was performed by irradiation with a 10 mR X-ray and then scanning by a 10 mW semiconductor laser (wavelength 780 nm).

**Table 10**

| Protecting layer | Sensitivity |
|---|---|
| Glass only | 1000 |
| Glass with an anti-reflecting multilayer (one side) | 1100 |
| Glass with a single anti-reflecting layer (one side) | 1170 |
| Glass with a single anti-reflecting layer (both side) | 1180 |

## Claims

1. A stimulable phosphor represented by the formula:
{(M^{II}X¹₂₋₂ᵤX²₂ᵤ)_{1-x-y}(M^{I}X¹₁₋ᵥX²ᵥ)ₓ (M^{III}X¹_{3-3w}X²_{3w})_{y}}₁₋ₐAₐ : bEu²⁺
where M^{II} represents at least one divalent metal selected from Ba, Be, Mg, Ca and Sr; M^{I} represents at least one monovalent metal selected from Li, Na, K, Rb and Cs; M^{III} represents at least one trivalent metal selected from Sc, Y, La, Ce, Pr, Nd, Sm, Gd, Tb, Dy, Ho, Er, Tm, Yb, Lu, Al, Ga, In and Tl; X¹ represents one element selected from Br and Cl; X² represents at least one halogen atom different from X¹; A represents at least one metal oxide selected from BeO, MgO, CaO, SrO, BaO, ZnO, Al₂O₃ , Y₂O₃ , La₂O₃ , In₂O₃ Ga₂O₃ , SiO₂ , TiO₂ , ZrO₂ , GeO₂ , SnO₂ , Nb₂O₅ , Ta₂O₅ and ThO₂; $\text{0 ≦ x+y ≦ 0.5}$ 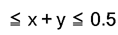 ; $\text{0 ≦ u+v+w < 0.1}$ ; 0 ≦ a ≦ 0.1; and 0 < b ≦ 0:2.

2. A stimulable phosphor according to claim 1, wherein said stimulable phosphor is BaBr₂ : bEu²⁺

3. A stimulable phosphor according to claim 1, wherein said stimulable phosphor is BaCl₂ : bEu²⁺.

4. A stimulable phosphor according to claim 1, wherein said stimulable phosphor is CaBr₂ : bEu²⁺.

5. A stimulable phosphor according to claim 1, wherein said stimulable phosphor is M^{II}Br₂ : bEu²⁺ where M^{II} represents a mixture of Ba and at least one element selected from Be, Mg, Ca and Sr.

6. A stimulable phosphor according to claim 1, wherein said stimulable phosphor is Ba_{1-y}M^{III}_{y}Br_{2+y} : bEu²⁺ (0 < y ≦ 0.5).

7. A stimulable phosphor according to claim 1, wherein said stimulable phosphor is Ba₁₋ₓM^{I}ₓBr₂₋ₓ : bEu²⁺ (0 < x ≦ 0.5).

8. A stimulable phosphor according to claim 1, wherein said stimulable phosphor is
Ba_{1-x-y}M^{I}ₓM^{III}_{y}Br_{2-x+y} : bEu²⁺ (0 < x+y ≦ 0.5).

9. A stimulable phosphor according to claim 1, wherein said stimulable phosphor is BaBr₂₋₂ᵤX²₂ᵤ : bEu²⁺.

10. A stimulable phosphor according to claim 1, wherein said stimulable phosphor is (BaBr₂)₁₋ₐAₐ : bEu²⁺.

11. A stimulable phosphor according to claim 1, wherein $\text{0 ≦ x+y ≦ 0.05}$ , $\text{0 ≦ u+v+w ≦ 0.08}$ ; 0 ≦ a ≦ 0.05; and 0 < b ≦ 0.1.

12. A stimulable phosphor according to claim 1, wherein $\text{0 ≦ x+y ≦ 0.01}$ , $\text{0 ≦ u+v+w ≦ 0.05}$ ; 0 ≦ a ≦ 0.01; and 0.0005 < b ≦ 0.002.

13. A method of making a stimulable phosphor as claimed in claim 1, comprising the steps of:
preparing a starting mixture having elements corresponding to the formula:
{(M^{II}X¹₂₋₂ᵤX²₂ᵤ)_{1-x-y}(M^{I}X¹₁₋ᵥX²ᵥ) ₓ(M^{III}X¹_{3-3w}X²_{3w})_{y}}₁₋ₐAₐ : bEu²⁺
where M^{II} represents at least one divalent metal selected from Ba, Be, Mg, Ca and Sr; M^{I} represents at least one monovalent metal selected from Li, Na, K, Rb and Cs; M^{III} represents at least one trivalent metal selected from Sc, Y, La, Ce, Pr, Nd, Sm, Gd, Tb, Dy, Ho, Er, Tm, Yb, Lu, Al, Ga, In and Tl; X¹ represents one element selected from Br and Cl; X² represents at least one halogen atom different from X¹; A represents at least one metal oxide selected from BeO, MgO, CaO, SrO, BaO, ZnO, Al₂O₃ , Y₂O₃ , La₂O₃ , In₂O₃ , Ga₂O₃ , SiO₂ , TiO₂ , ZrO₂ , GeO₂ , SnO₂ , Nb₂O₅ , Ta₂O₅ and ThO₂; $\text{0 ≦ x+y ≦ 0.5}$ 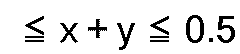 ; $\text{0 ≦ u+v+w < 0.1}$ ; 0 ≦ a ≦ 0.1; and 0 < b ≦ 0.2; and
firing said starting mixture in a neutral or reducing atmosphere at 500 - 1000°C.

14. An X-ray image transforming sheet comprising the stimulable phosphor as claimed in claim 1, coated on a substrate.

15. A method of forming an X-ray image, comprising the steps of:
rendering the X-ray image transforming sheet as set forth in claim 14 to absorb an X-ray passed through an object,
stimulating the X-ray image transforming sheet by electromagnetic waves having a wavelength of 500 - 1000 nm, to release the energy stored in the phosphor as a phostostimulated luminescent light; and
detecting the released photostimulated luminescent light to obtain an image of the object.

## Patentansprüche

1. Stimulierbarer Leuchtstoff, dargestellt durch die Formel:
{(M^{II}X¹₂₋₂ᵤX²₂ᵤ)_{1-x-y}(M^{I}X¹₁₋ᵥX²ᵥ)ₓ(M^{III}X¹_{3-3w}X²_{3W})_{y}}₁₋ₐAₐ : bEu²⁺
wobei M^{II} für mindestens ein aus Ba, Be, Mg, Ca und Sr ausgewähltes zweiwertiges Metall steht;
M^{I} für mindestens ein aus Li, Na, K, Rb und Cs ausgewähltes einwertiges Metall steht; M^{III} für mindestens ein aus Sc, Y, La, Ce, Pr, Nd, Sm, Gd, Tb, Dy, Ho, Er, Tm, Yb, Lu, Al, Ga, In und Tl ausgewähltes dreiwertiges Metall steht; X¹ für ein aus Br und Cl ausgewähltes Element steht; X² für mindestens ein von X¹ verschiedenes Halogenatom steht; A für mindestens ein aus BeO, MgO, CaO, SrO, BaO, ZnO, Al₂O₃, Y₂O₃, La₂O₃, In₂O₃, Ga₂O₃, SiO₂, TiO₂, ZrO₂, GeO₂, SnO₂, Nb₂O₅, Ta₂O₅ und ThO₂ ausgewähltes Metalloxid steht; $\text{0 ≦ x + y ≦ 0,5}$ ; $\text{0 ≦ u + v + w < 0,1}$ ; 0 ≦ a ≦ 0,1; und 0 < b ≦ 0,2.

2. Stimulierbarer Leuchtstoff nach Anspruch 1, welcher anregbare Leuchtstoff BaBr₂ : bEu²⁺ ist.

3. Stimulierbarer Leuchtstoff nach Anspruch 1, welcher anregbare Leuchtstoff BaCl₂ : bEu²⁺ ist.

4. Stimulierbarer Leuchtstoff nach Anspruch 1, welcher anregbare Leuchtstoff CaBr₂ : bEu²⁺ ist.

5. Stimulierbarer Leuchtstoff nach Anspruch 1, welcher anregbare Leuchtstoff M^{II}Br₂ : bEu²⁺ ist, und M^{II} für eine Mischung aus Ba und mindestens ein aus Be, Mg, Ca und Sr ausgewähltes Element steht.

6. Stimulierbarer Leuchtstoff nach Anspruch 1, welcher anregbare Leuchtstoff Ba_{1-y}M^{III}_{y}Br_{2+y} : bEu²⁺ (0 < y ≦ 0,5) ist.

7. Stimulierbarer Leuchtstoff nach Anspruch 1, welcher anregbare Leuchtstoff Ba₁₋ₓM^{I}ₓBr₂₋ₓ : bEu²⁺ (0 < x ≦ 0,5) ist.

8. Stimulierbarer Leuchtstoff nach Anspruch 1, welcher anregbare Leuchtstoff Ba_{1-x-y}M^{I}ₓM^{III}_{y}Br_{2-x+y} : bEu²⁺ (0 < x + y ≦ 0,5) ist.

9. Stimulierbarer Leuchtstoff nach Anspruch 1, welcher anregbare Leuchtstoff BaBr₂₋₂ᵤ X²₂ᵤ: bEu²⁺ ist.

10. Stimulierbarer Leuchtstoff nach Anspruch 1, welcher anregbare Leuchtstoff (BaBr₂)₁₋ₐAₐ : bEu²⁺ ist.

11. Stimulierbarer Leuchtstoff nach Anspruch 1, wobei $\text{0 ≦ x + y ≦ 0,05}$ ;
$\text{0 ≦ u + v + w ≦ 0,08}$ ; 0 ≦ a ≦ 0,05; und 0 < b ≦ 0,1 ist.

12. Stimulierbarer Leuchtstoff nach Anspruch 1, wobei $\text{0 ≦ x + y ≦ 0,01}$ ;
$\text{0 ≦ u + v + w ≦ 0,05}$ ; 0 ≦ a ≦ 0 01; und 0,0005 < b ≦ 0,002 ist.

13. Verfahren zur Herstellung eines anregbaren Leuchtstoffes nach Anspruch 1, welches die Schritte umfaßt: Vorbereiten einer Ausgangsmischung mit Elementen, die der Formel:
{(M^{II}X¹₂₋₂ᵤX²₂ᵤ)_{1-x-y}(M^{I}X¹₁₋ᵥX²ᵥ)ₓ(M^{III}X¹_{3-3w}X²_{3W})_{y}}₁₋ₐAₐ : bEu²⁺
entsprechen, wobei M^{II} für mindestens ein aus Ba, Be, Mg, Ca und Sr ausgewähltes zweiwertiges Metall steht;
M^{I} für mindestens ein aus Li, Na, K, Rb und Cs ausgewähltes einwertiges Metall steht; M^{III} für mindestens ein aus Sc, Y, La, Ce, Pr, Nd, Sm, Gd, Tb, Dy, Ho, Er, Tm, Yb, Lu, Al, Ga, In und Tl ausgewähltes dreiwertiges Metall steht; X¹ für ein aus Br und Cl ausgewähltes Element steht; X² für mindestens ein von X¹ verschiedenes Halogenatom steht; A für mindestens ein aus BeO, MgO, CaO, SrO, BaO, ZnO, Al₂O₃, Y₂O₃, La₂O₃, In₂O₃, Ga₂O₃, SiO₂, TiO₂, ZrO₂, GeO₂, SnO₂, Nb₂O₅, Ta₂O₅ und ThO₂ ausgewähltes Metalloxid steht; $\text{0 ≦ x + y ≦ 0,5}$ ; $\text{0 ≦ u + v + w < 0,1}$ ; 0 ≦ a ≦ 0,1; und 0 < b ≦ 0,2; und
Glühen der Ausgangsmischung in einer neutralen oder einer reduzierenden Atmosphäre bei 500 - 1000°C.

14. Röntgenabbildungs-Umwandlungsfolie, welche den anregbaren Leuchtstoff gemäß Anspruch 1 auf ein Substrat beschichtet aufweist.

15. Verfahren zur Bildung einer Röntgenabbildung, welches die Schritte aufweist:
Vorsehen der Röntgenabbildungs-Umwandlungsfolie gemäß Anspruch 14 derart, daß sie einen durch ein Objekt geleiteten Röntgenstrahl absorbiert,
Anregen der Röntgenabbildungs-Umwandlungsfolie mit elektromagnetischen Wellen mit einer Wellenlänge von 500 - 1000 nm, um die im Leuchtstoff gespeicherte Energie als ein photostimuliertes Lumineszenzlicht freizusetzen; und
Erfassen des freigesetzten photostimulierten Lumineszenzlichtes, um eine Abbildung des Objektes zu erhalten.

## Revendications

1. Phosphore stimulable représenté par la formule :
{(M^{II}X¹₂₋₂ᵤX²₂ᵤ)_{1-x-y}(M^{I}X¹₁₋ᵥX²ᵥ)ₓ(M^{III}X¹_{3-3w}X²_{3w})_{y}}₁₋ₐAₐ:bEu²⁺
où M^{II} représente au moins un métal divalent choisi parmi le Ba, le Be, le Mg, le Ca et le Sr; M^{I} représente au moins un métal monovalent choisi parmi le Li, le Na, le K, le Rb et le Cs; M^{III} représente au moins un métal trivalent choisi parmi le Sc, l'Y, le La, le Ce, le Pr, le Nd, le Sm, le Gd, le Tb, le Dy, le Ho, l'Er, le Tm, l'Yb, le Lu, l'Al, le Ga, l'In et le Tl; X¹ représente un élément choisi parmi le Br et le Cl; X² représente au moins un atome d'halogène différent de X¹ ; A représente au moins un oxyde de métal choisi parmi le BeO, le MgO, le CaO, le SrO, le BaO, le ZnO, l'Al₂O₃, l'Y₂O₃, le La₂O₃, l'In₂O₃, le Ga₂O₃, le SiO₂, le TiO₂, le ZrO₂, le GeO₂, le SnO₂, le Nb₂O₅, le Ta₂O₅ et le ThO₂ ; $\text{0 <= x+y <= 0,5}$ ; $\text{0 <= u+v+w < 0,1}$ ; 0 <= a <= 0,1 ; et 0 < b <= 0,2.

2. Phosphore stimulable selon la revendication 1, dans lequel ledit phosphore stimulable est du BaBr₂:bEu²⁺.

3. Phosphore stimulable selon la revendication 1, dans lequel ledit phosphore stimulable est du BaCl₂:bEu²⁺.

4. Phosphore stimulable selon la revendication 1, dans lequel ledit phosphore stimulable est du CaBr₂:bEu²⁺.

5. Phosphore stimulable selon la revendication 1, dans lequel ledit phosphore stimulable est du M^{II}Br₂:bEu²⁺ où M^{II} représente un mélange de Ba et d'au moins un élément choisi parmi le Be, le Mg, le Ca et le Sr.

6. Phosphore stimulable selon la revendication 1, dans lequel ledit phosphore stimulable est du Ba_{1-y}M^{III}Br_{2+y}:bEu²⁺ (0 < y <= 0,5).

7. Phosphore stimulable selon la revendication 1, dans lequel ledit phosphore stimulable est du Ba₁₋ₓM^{I}ₓBr₂₋ₓ:bEu²⁺ (0 < x <= 0,5).

8. Phosphore stimulable selon la revendication 1, dans lequel ledit phosphore stimulable est du Ba_{1-x-y}M^{I}ₓM^{III}_{y}Br_{2-x+y}: bEu²⁺ ( $\text{0 < x+y <= 0,5}$ ).

9. Phosphore stimulable selon la revendication 1, dans lequel ledit phosphore stimulable est du BaBr₂₋₂ᵤX²₂ᵤ:bEu²⁺.

10. Phosphore stimulable selon la revendication 1, dans lequel ledit phosphore stimulable est du (BaBr₂)₁₋ₐAₐ:bEu²⁺.

11. Phosphore stimulable selon la revendication 1, dans lequel 0 $\text{<= x+y <= 0,05}$ , $\text{0 <= u+v+w <= 0,08}$ 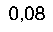 ; 0 <= a <= 0,05 ; et 0 < b <= 0,1.

12. Phosphore stimulable selon la revendication 1, dans lequel $\text{0 <= x+y <= 0,01}$ , $\text{0 <= u+v+w <= 0,05}$ 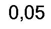 ; 0 <= a <= 0,01 ; et 0,0005 < b <= 0,002.

13. Procédé de fabrication d'un phosphore stimulable selon la revendication 1, comprenant les étapes de :
préparation d'un mélange de départ comportant des éléments correspondant à la formule :
{(M^{II}X¹₂₋₂ᵤX²₂ᵤ)_{1-x-y}(M^{I}X¹₁₋ᵥX²ᵥ)ₓM^{III}X¹_{3-3w}X²_{3w})y} ₁₋ₐAₐ : bEu²⁺
où M^{II} représente au moins un métal bivalent choisi parmi le Ba, le Be, le Mg, le Ca et le Sr ; M^{I} représente au moins un métal monovalent choisi parmi le Li, le Na, le K, le Rb et le Cs ; M^{III} représente au moins un métal trivalent choisi parmi le Sc, l'Y, le La, le Ce, le Pr, le Nd, le Sm, le Gd, le Tb, le Dy, le Ho, l'Er, le Tm, l'Yb, le Lu, l'Al, le Ga, l'In et le Tl ; X¹ représente un élément choisi parmi le Br et le Cl ; X² représente au moins un atome d'halogène différent de X¹ ; A représente au moins un oxyde de métal choisi parmi le BeO, le MgO, le CaO, le SrO, le BaO, le ZnO, l'Al₂O₃, l'Y₂O₃, le La₂O₃, l'In₂O₃, le Ga₂O₃, le SiO₂, le TiO₂, le ZrO₂, le GeO₂, le SnO₂, le Nb₂O₅, le Ta₂O₅ et le ThO₂; $\text{0 <= x+y <= 0,5}$ ; $\text{0 <= u+v+w < 0,1}$ ; 0 <= a < = 0,1 ; et 0 < b <= 0,2 ; et
combustion dudit mélange de départ dans une atmosphère neutre ou de réduction à 500-1000°C.

14. Feuille de transformation d'image rayons X comprenant du phosphore stimulable selon la revendication 1 recouvrant un substrat.

15. Procédé de formation d'une image rayons X comprenant les étapes de :
réalisation de la feuille de transformation d'image rayons X telle que définie dans la revendication 14 afin d'absorber un rayon X qui a traversé un objet ;
stimulation de la feuille de transformation d'image rayons X par des ondes électromagnétiques présentant une longueur d'onde de 500 à 1000 nm afin de libérer l'énergie stockée dans le phosphore en tant que lumière luminescente photostimulée ; et
détection de la lumière luminescente photostimulée libérée afin d'obtenir une image de l'objet.
